# DEMANDE DE BREVET EUROPEEN

(11) **EP 4 606 641 A1**
(43) Date de publication de la demande: **27.08.2025**
(21) Numéro de dépôt: 25159111.1
(22) Date de dépôt: 20.02.2025
(51) Int. Cl.: B60P 3/34

(54) **TENTE-REMORQUE POUR VÉHICULE À DEUX ROUES**

(30) Priorité: 23.02.2024 CH 1952024
(71) Demandeur: CampCycle Sàrl, 1595 Faoug (CH)
(72) Inventeur: Pinsonnault, Martin, 1595 Faoug (CH)
(74) Mandataire: P&TS SA (AG, Ltd.)

(57) **Abrégé**

Tente-remorque pour véhicule à deux roues, comportant :
un châssis ;
deux roues fixées au châssis ;
un caisson monté sur le châssis,
un habitacle dépliant monté par-dessus le caisson, ledit habitacle comportant un plancher monté en rotation par-dessus ledit couvercle autour d'un axe vertical de manière à pouvoir pivoter de 90° entre une première position destinée au transport avec l'habitacle replié et une deuxième position destinée au dépliage de l'habitacle.

## Description

### Domaine technique

La présente invention concerne une tente-remorque spécifiquement conçue pour être attelée à une bicyclette, offrant une solution multifonctionnelle et pratique pour les amateurs de cyclotourisme et d'aventures en plein air.

### Etat de la technique

Des remorques pour bicyclettes sont déjà connues. On connaît également des remorques sous forme de mini-caravanes destinées au cyclotourisme et qui permettent au cycliste de dormir lorsqu'il arrive à l'étape. De telles remorques sont cependant lourdes et encombrantes.

On connaît également des tentes-remorques pour bicyclettes qui peuvent se déplier pour fournir un habitacle à l'arrêt. De telles tentes dépliantes sont généralement plus légères que des mini-caravanes, tout en offrant néanmoins un plancher confortable pour dormir. Leur encombrement reste néanmoins important, notamment lorsque la remorque est tractée. Les tentes-remorques pour bicyclettes existantes sont donc peu maniables.

US3737191 décrit une remorque avec plusieurs portions d'habitacle emboîtées l'une dans l'autre et qui se déploient en pivotant autour d'un axe vertical de manière à agrandir la surface de couchage. La construction est rigide en sorte que le poids est important. La remorque est donc destinée à être tractée par une voiture. Malgré ce poids important, cette remorque ne comporte pas d'espace de rangement pour des bagages hors de l'habitacle.

AU199674266B2 décrit une remorque également destinée à être tractée par une voiture. Elle comporte un tiroir extractable qui contient une tente déployable. Cette remorque comporte un espace de rangement pour des bagages, mais dont la surface s'ajoute à celle de l'habitacle en position déployée. La surface occupée au sol en position déployée est donc importante.

### Bref résumé de l'invention

Un but de la présente invention est de proposer une tente-remorque spécifiquement conçue pour être attelée à une bicyclette et qui soit plus optimale que les solutions de l'état de la technique.

Selon l'invention, ces buts sont atteints notamment au moyen d'une tente-remorque pour véhicule à deux roues, comportant :
un châssis ;
deux roues fixées au châssis ;
un caisson monté sur le châssis ;
un habitacle dépliant monté par-dessus le caisson, ledit habitacle comportant un plancher autour d'un axe vertical de manière à pouvoir pivoter de 90° entre une première position destinée au transport avec l'habitacle replié et une deuxième position destinée au dépliage de l'habitacle.

La tente-remorque comporte un caisson monté sur le châssis. Le plancher de l'habitacle est monté en rotation par-dessus le caisson autour de l'axe vertical. Cette solution permet de disposer d'un espace de rangement pour des bagages en dehors de l'habitacle sans occuper d'espace au sol supplémentaire par rapport à l'habitacle déplié.

L'invention part notamment de la constatation que la largeur idéale d'un lit est d'au moins 80cm, ou davantage si le dormeur souhaite un espace de rangement. Une telle largeur aboutit cependant à une remorque trop large et peu maniable.

Il est cependant aisé de concevoir une remorque pour bicyclette d'une longueur supérieure à 80 cm sans le timon. Par conséquent, la longueur de la remorque peut aisément dépasser la largeur de lit requise. Il est donc approprié de prévoir la largeur du plancher formant le lit dans la longueur de la remorque.

Il est cependant nécessaire de prolonger ce plancher afin de réaliser un lit de longueur suffisante. Une remorque étroite n'offre pas un appui suffisant pour supporter ces prolongations de manière stable.

En pivotant le plancher de l'habitacle entre la première position de transport et la deuxième position de déploiement, on peut dès lors réaliser un plancher dont la largeur s'étend selon l'axe de traction de la remorque lors du transport, et perpendiculairement à cet axe lors du déploiement. Après pivotement, on peut ainsi déployer le plancher de manière à le prolonger et à réaliser une surface de couchage parallèle à l'axe de traction de la remorque. La longueur du lit déployé s'étend ainsi dans la longueur de la remorque, ce qui offre un support et une stabilité importants.

Le caisson peut comporter un couvercle. Le plancher de l'habitacle peut être monté en rotation au-dessus du couvercle.

Le couvercle est de préférence non amovible par rapport au caisson et l'accès au volume interne du caisson se fait par les parois latérales du caisson.

Le volume du caisson est suffisant pour y loger des bagages. Le volume du caisson est de préférence supérieur à 100 litres.

L'axe vertical traverse de préférence le couvercle du caisson.

L'axe vertical traverse de préférence le plancher.

L'axe vertical est de préférence au centre du plancher en position repliée.

L'axe vertical est de préférence au centre du plancher en position déployée.

L'axe vertical peut être matérialisé par un arbre coulissant dans un palier du couvercle, dans un palier du plancher, par un roulement à bille, ou par n'importe quelle structure permettant au plancher de pivoter par rapport au couvercle.

La direction verticale est définie lorsque la remorque est placée sur un sol horizontal plat. Dans cette demande, une direction est considérée comme étant verticale si elle forme un angle de moins de 10° par rapport à une direction orthogonale au sol.

L'habitacle peut comporter un toit, par exemple un toit comportant une portion de cylindre dont les génératrices sont parallèles à l'axe des dites roues dans la première position, et perpendiculaires à cet axe lorsque l'habitacle est déplié dans la deuxième position. Le toit peut par exemple être un toit à deux pans ou de préférence un toit arrondi, par exemple un toit dont la section forme un arc de cercle.

L'habitacle peut comporter deux parois sensiblement verticales en position repliées. Ces parois peuvent former les deux extrémités du cylindre pour fermer le toit. Ces parois peuvent être parallèles à la direction de traction de la tente-remorque, chacune de ces parois étant reliée par une charnière au plancher afin de pouvoir se rabattre à l'horizontale lors du dépliage de manière à prolonger ce plancher. En position dépliée, les parois verticales de l'habitacle prolongent ainsi la longueur du plancher dans le sens de traction de la remorque.

Le couvercle du caisson forme un support sur lequel les deux parois s'appuient partiellement en position déployée.

Ces parois peuvent ainsi s'appuyer sur le couvercle lorsqu'elles sont dépliées à l'horizontale.

Chaque paroi peut être liée à une portion du toit. Les deux portions du toit peuvent être superposées l'une à l'autre en position repliée, et formant deux extrémités verticales de l'habitacle en position dépliée.

La tente-remorque peut comporter une portion textile destinée à recouvrir l'habitacle entre ces deux portions de toit lorsque l'habitacle est déplié.

Le caisson peut comporter des parois latérales, au moins une de ces parois étant munie d'une porte permettant d'accéder au volume interne du caisson.

### Brève description des figures

Des exemples de mise en oeuvre de l'invention sont indiqués dans la description illustrée par les figures annexées dans lesquelles :
- La figure 1 illustre une vue de côté de la tente-remorque en position repliée ;
- La figure 2 illustre une vue de l'arrière de la tente-remorque en position repliée ;
- La figure 3 illustre une vue en perspective de la tente-remorque en position repliée ;
- La figure 4 illustre une vue en perspective de la tente-remorque pendant la rotation de l'habitacle au-dessus du caisson ;
- La figure 5 illustre une vue en perspective de la tente-remorque dans la deuxième position après la rotation de l'habitacle au-dessus du caisson, et pendant le déploiement d'un des deux portions de toit ;
- La figure 6 illustre une vue en perspective de la tente-remorque dans la deuxième position après la rotation de l'habitacle au-dessus du caisson, et après le déploiement des deux portions de toit ;
- La figure 7 illustre une vue en perspective de la tente-remorque dans la deuxième position après la rotation de l'habitacle au-dessus du caisson, après le déploiement des deux portions de toit et l'installation de la portion de tente au-dessus du plancher central ;

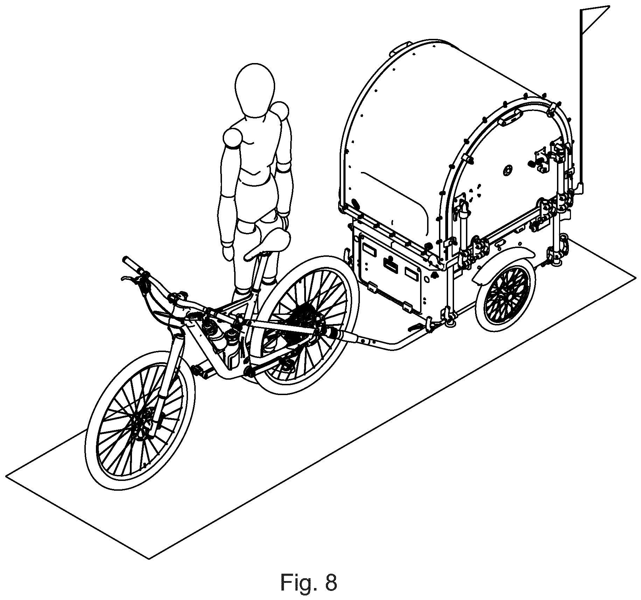

- La figure 8 illustre une vue en perspective de la tente-remorque en première position repliée, avec une bicyclette d'un utilisateur
- La figure 9 illustre une vue en perspective de la tente-remorque avec un second caisson installé à la place de l'habitacle au-dessus du premier caisson.

### Exemple(s) de mode de réalisation de l'invention

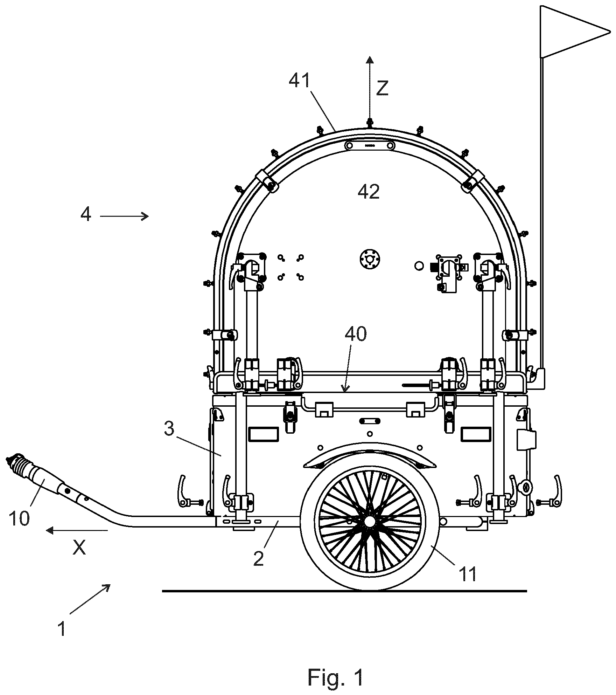

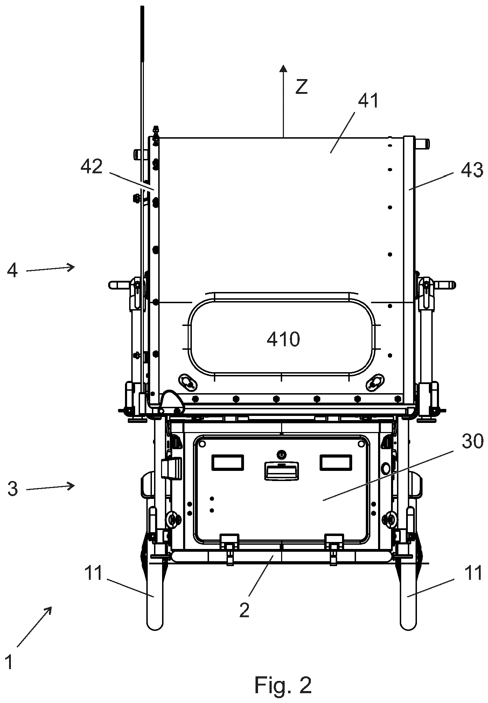

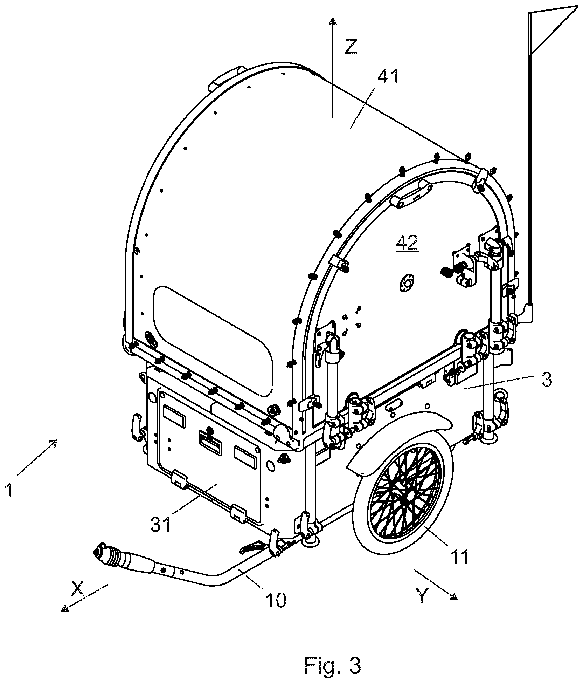

Les figures 1 à 3 illustrent un exemple de tente-remorque 1 repliée et avec l'habitacle en première position pour la traction derrière un véhicule à deux roues, par exemple une bicyclette ou un vélo électrique. Elle comporte un châssis 2 équipé d'exactement deux roues 11. Un timon 10 permet d'atteler la tente-remorque derrière le véhicule. La remorque comporte un caisson 3 pour le transport de bagages, et un habitacle 4 monté au-dessus de ce caisson. Les roues peuvent être munies de freins commandés depuis le guidon de la bicyclette, avec une transmission par câble ou électrique.

Dans un mode de réalisation non représenté, le caisson 3 peut comporter une motorisation électrique pour entraîner les roues 11, par exemple des batteries électriques et un moteur. Même dans le cas d'une remorque non motorisée, des batteries peuvent être installées dans ce caisson pour alimenter ou charger des petits appareils électriques (téléphone, laptop, lampe, etc). Une ou plusieurs portes 30, 31 permettent d'accéder à l'intérieur de ce caisson depuis l'avant, l'arrière et/ou les côtés de la remorque, afin d'y déposer ou d'y prélever des bagages ou des accessoires pour le montage de la tente.

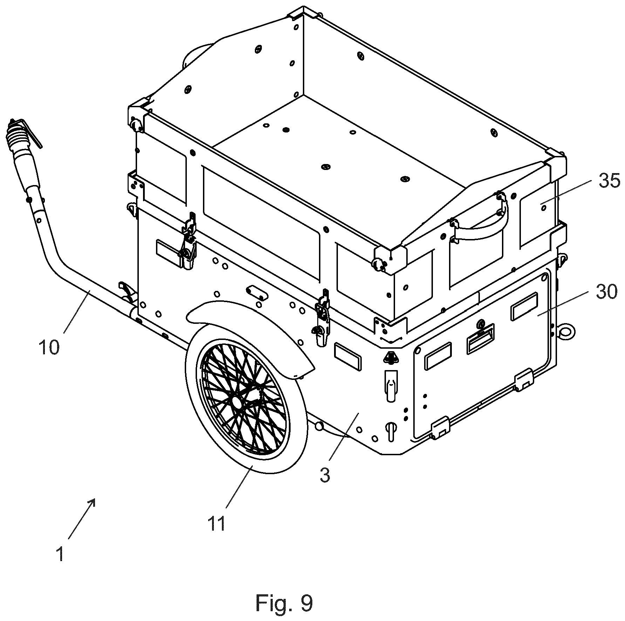

L'habitacle 4 peut être monté de manière amovible sur le caisson 3 ; il est possible de le retirer pour ne transporter que le caisson 3, ou de le remplacer par un deuxième caisson 35 comme illustré sur la figure 9.

L'habitacle comporte un plancher 40 monté de manière rotative au-dessus du caisson 3, par exemple au-dessus du couvercle de ce caisson. Le plancher 40 a de préférence une forme sensiblement rectangulaire ; en position de transport (première position illustrée sur ces figures 1 à 3), sa plus grande longueur est dans la direction x de traction de la tente-remorque, c'est-à-dire perpendiculaire à l'axe des roues 11 qui s'étend selon la direction y. Le plancher peut être réalisé en bois, en aluminium, ou de préférence avec une structure en nid d'abeille.

L'habitacle comporte en outre un toit 41, ici un toit cylindrique avec une section formant un arrondi en arc de cercle. D'autres formes de toit peuvent être réalisées. Les parois latérales 42 et 43 de ce toit, de chaque côté de la tente-remorque en position repliée, peuvent s'étendre dans des plans verticaux. La surface supérieure 41 du toit peut être en matériau flexible et couverte partiellement d'un panneau photovoltaïque flexible. Cette surface peut être tendue par des arceaux déployables. Les parois latérales 42, 43 peuvent être en bois, en aluminium, ou dans un autre matériau rigide apte à supporter le poids d'une personne.

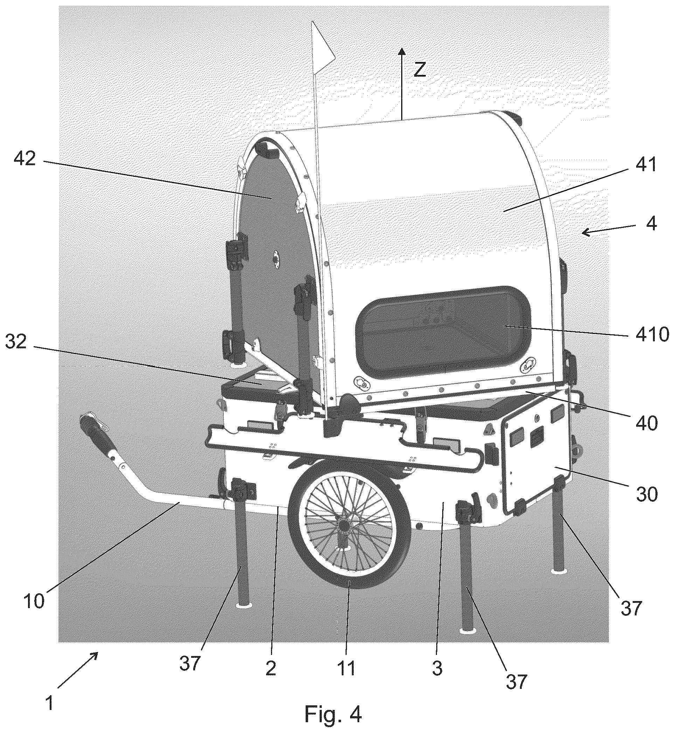

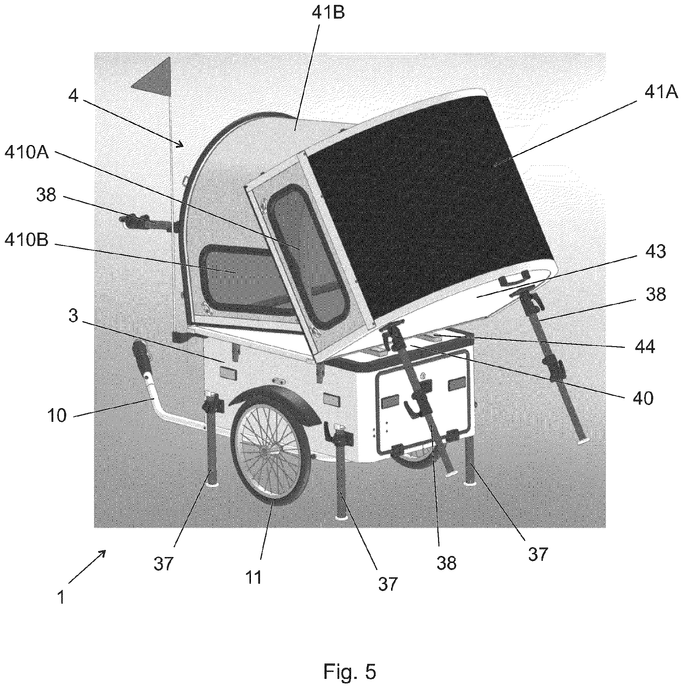

La figure 4 illustre une vue en perspective de la tente-remorque 1 pendant la rotation de l'habitacle 4 au-dessus du caisson 3. Comme on le voit, le caisson 3 comporte un couvercle 32. Le plancher 40 de l'habitacle est monté sur ce couvercle de manière à pouvoir pivoter autour d'un axe vertical z entre la première position illustrée sur les figures 1 à 3 et la deuxième position illustrée sur les figures 5 à 7. Des moyens de verrouillage sont avantageusement prévus pour verrouiller le plancher 40 soit dans la première position, soit dans la deuxième position perpendiculaire à la première.

Des pieds amovibles 37 peuvent de préférence être montés sous le caisson 3 afin de le stabiliser sur le sol. La hauteur de ces pieds est de préférence réglable.

Dans la première position illustrée sur les figures 1 à 3, la largeur du plancher 40 correspond sensiblement à celle du couvercle 32, en sorte que l'habitacle ne dépasse pratiquement pas latéralement au-delà du caisson 3. Cela garantit une maniabilité importante lorsque la tente-remorque est tractée. Dans la deuxième position illustrée sur les figures 5 à 7, le plancher 40 tourné de 90° dépasse latéralement de chaque côté du caisson 3, de manière à offrir une largeur suffisante pour un dormeur.

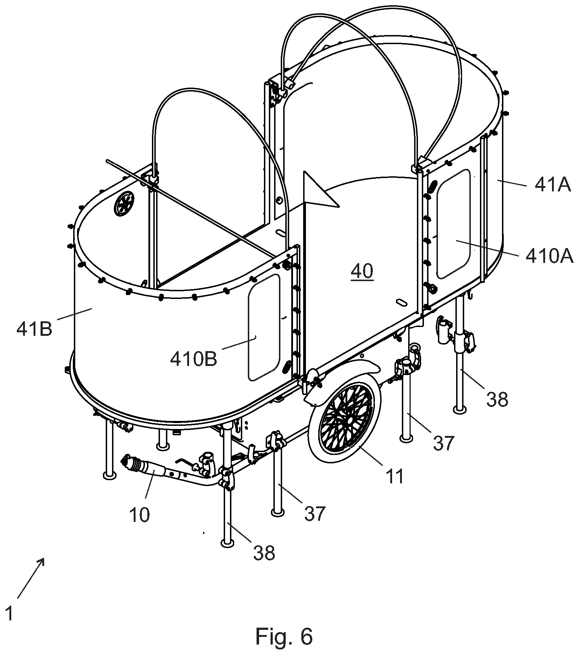

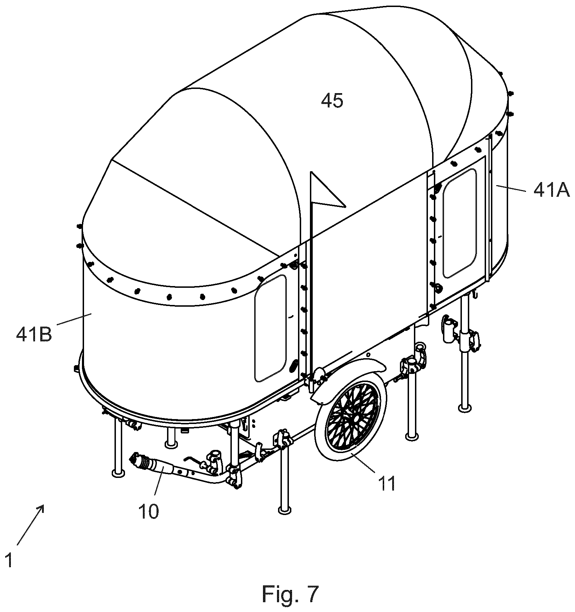

La figure 5 illustre le déploiement de l'habitacle 4 après sa rotation. On voit que le toit 41 est en réalité composé de deux portions de toit 41A, 41B superposées en position repliée, et agencées pour pouvoir se déplier à l'avant respectivement à l'arrière de la tente-remorque. Une ou plusieurs fenêtres 410 peuvent y être ménagées. A cet effet, les parois verticales 42 et 43 sont chacune montées sur le plancher 40 au moyen d'une ou plusieurs charnières leur permettant de pivoter autour d'un axe horizontal entre la position verticale des figures 1 à 4 et la position horizontale des figures 6 et 7. Dans cette position horizontale, ces parois 42, 43 prolongent le plancher 40 afin de réaliser une surface de couchage de longueur suffisante pour un adulte. Des pieds supplémentaires 38 de hauteur variable permettent de supporter ces parois 42, 43 en position horizontale. Les deux portions de toit 41A, 41B ferment les extrémités longitudinales de l'habitacle en position dépliée, comme on le voit sur la figure 6.

L'habitacle peut ensuite être fermé en montant une toile de tente 45 par-dessus la portion centrale au-dessus du plancher 40, et au-dessus des parois 42, 43 (figure 7).

## Revendications

1. Tente-remorque (1) pour véhicule à deux roues, comportant :
un châssis (2) ;
deux roues (11) fixées au châssis;
un caisson (3) monté sur le châssis (2),
un habitacle (4) dépliant monté par-dessus le caisson, ledit habitacle comportant un plancher (40) monté en rotation par-dessus ledit châssis autour d'un axe vertical (z) de manière à pouvoir pivoter de 90° entre une première position destinée au transport avec l'habitacle replié et une deuxième position destinée au dépliage de l'habitacle.

2. Tente-remorque (1) selon la revendication 1, ledit caisson comportant un couvercle, ledit plancher (40) étant monté en rotation par-dessus ledit couvercle autour dudit axe vertical (z).

3. Tente-remorque selon l'une des revendications 1 ou 2, ledit habitacle comportant un toit (41) en position repliée, le toit comportant une portion de cylindre dont les génératrices sont parallèles à l'axe des dites roues (11) dans la première position, et perpendiculaires à cet axe lorsque l'habitacle est replié dans la deuxième position.

4. Tente-remorque selon l'une des revendications 1 à 3, ledit habitacle comportant deux parois (42, 43) sensiblement verticales en position repliées, lesdites parois étant parallèles à la direction de traction (x) de la tente-remorque, chacune de ces parois étant reliée par une charnière (44) au plancher afin de pouvoir se rabattre à l'horizontale lors du dépliage de manière à prolonger ce plancher.

5. Tente-remorque selon la revendication 4, lesdites parois (42, 43) s'appuyant sur une portion supérieure (32) du caisson (3) lorsqu'elles sont dépliées à l'horizontale.

6. Tente-remorque selon l'une des revendications 4 ou 5, chaque paroi (42, 43) étant liée à une portion dudit toit (41A, 41B), les deux portions du toit étant superposées l'une à l'autre en position repliée, et formant deux extrémités verticales de l'habitacle en position dépliée.

7. Tente-remorque selon la revendication 6, comportant une portion de textile (45) destinée à recouvrir ledit plancher entre les deux portions de toit lorsque l'habitacle est déplié.

8. Tente-remorque selon l'une des revendications 1 à 7, le caisson (3) comportant des parois latérales, au moins une de ces parois étant munie d'une porte (30, 31) permettant d'accéder au volume interne du caisson.

9. Tente-remorque selon l'une des revendications 2 à 8, le couvercle du caisson formant un support sur lequel les deux parois s'appuient partiellement en position déployée.

10. Tente-remorque selon l'une des revendications 1 à 9, l'axe vertical traversant le plancher.

11. Tente-remorque selon la revendication 10, l'axe vertical traversant le centre du plancher en position repliée et en position déployée.

12. Tente-remorque selon l'une des revendications 1 à 11, le volume du caisson (3) étant supérieur à 100 litres de manière à pouvoir recevoir des bagages.
